(19) **Europäisches Patentamt**

**European Patent Office**

**Office européen des brevets**

(11) **EP 0 888 208 B1**

(12) **EUROPÄISCHE PATENTSCHRIFT**

(45) Veröffentlichungstag und Bekanntmachung des Hinweises auf die Patenterteilung:
**06.02.2002 Patentblatt 2002/06**

(21) Anmeldenummer: **97916376.3**

(22) Anmeldetag: **22.03.1997**

(51) Int Cl.⁷: **B29C 53/22**, B29C 51/08, B29C 59/02

(86) Internationale Anmeldenummer:
**PCT/EP97/01465**

(87) Internationale Veröffentlichungsnummer:
**WO 97/35705 (02.10.1997 Gazette 1997/42)**

(54) **VERFAHREN ZUM BEULSTRUKTURIEREN DÜNNER MATERIALBAHNEN**

PROCESS FOR PRODUCING AN EMBOSSED STRUCTURE IN THIN MATERIAL WEBS

PROCEDE DE STRUCTURATION DE FINES BANDES DE MATERIAU PAR GAUFRAGE

(84) Benannte Vertragsstaaten:
**AT BE CH DE DK ES FI FR GB GR IE IT LI LU MC NL PT SE**

(30) Priorität: **23.03.1996 DE 19611478**

(43) Veröffentlichungstag der Anmeldung:
**07.01.1999 Patentblatt 1999/01**

(73) Patentinhaber: **MIRTSCH, Frank**
**D-13465 Berlin (DE)**

(72) Erfinder:
• **MIRTSCH, Frank**
**D-13465 Berlin (DE)**
• **BÜTTNER, Olaf**
**D-10713 Berlin (DE)**

• **ELLERT, Jochen**
**D-10407 Berlin (DE)**

(74) Vertreter: **Kaewert, Klaus**
**Rechtsanwalt, Gänsestrasse 4**
**40593 Düsseldorf (DE)**

(56) Entgegenhaltungen:
WO-A-94/22612          DE-A- 2 023 775
DE-A- 2 318 680        DE-A- 4 437 986
DE-C- 4 311 978        FR-A- 1 463 640

• **PATENT ABSTRACTS OF JAPAN vol. 007, no. 244 (M-252), 28.Oktober 1983 & JP 58 131036 A (TOKYO SHIBAURA DENKI KK), 4.August 1983,**

EP 0 888 208 B1

**Beschreibung**

Die Erfindung betrifft ein Verfahren zur Beulstrukturierung, bei dem gekrümmte Materialbahnen über im Abstand zueinander angeordneten Stützelementen mit Druck beaufschlagt werden.

Es sind zahlreiche Verfahren bekannt, um dünnwandige Materialbahnen zu strukturieren. Zu diesen Verfahren gehören die bekannten Umformverfahren, wie das Einwalzen von Sicken oder das Einprägen von Strukturen mit Hilfe komplizierter Formwerkzeuge, wenn dreidimensionale Versteifungen erzeugt werden sollen. Diese mechanischen Umformverfahren besitzen den Nachteil, daß man dazu aufwendige und teure Formwerkzeuge benötigt, daß die zu strukturierenden Materialbahnen stark plastifiziert werden und daß die Oberflächengüte des Ausgangsmaterials durch die mechanische Flächenpressung leidet.

In der Europäischen Patentanmeldung 0 441 618 A 1 wird ein Strukturierungsverfahren beschrieben, bei dem polyedrische Strukturen durch mechanische Formwerkzeuge (zwei Prägewalzen) erzeugt werden. Um axiale Sicken in Dosen einzuprägen, ist ferner eine Vorrichtung bekannt, mit deren Hilfe die Dose auf der Innenseite mit axialen, starren Elementen abgestützt und auf der Außenseite mit einer elastischen Rolle mit Druck beaufschlagt wird (DE 35 87 768 T 2). Es ist auch vorgeschlagen worden (US Patent 4.576.669), eine Kunststoffolie über eine Walze zu führen, in der sich Näpfchen befinden, in die der Kunststoff durch Vakuum hineingezogen wird. Auf diese Weise läßt sich die Formsteifigkeit der Folie aber nicht verbessern. Ein Verfahren zum Einbeulen von Kunststoffolie, das runde Strukturen erzeugt, zwischen denen breite, nicht verformte Teilflächen stehen bleiben (Französische Anmeldung 1.283.530), ergibt ebenfalls keine nennenswerte Verbesserung der Formsteifigkeit der so behandelten Folie.

Ferner ist ein Verfahren bekannt, nach dem dünne Materialbahnen oder Folien beulartig strukturiert werden. Dabei wird die gekrümmte, dünne Materialbahn oder Folie auf der Innenseite durch linienförmige Stützelemente abgestützt und von außen mit Druck beaufschlagt. Der äußere Druck wird hydraulisch aufgebracht. Auf diese Weise entstehen versetzte Beulstrukturen, die die Formsteifigkeit der Materialbahn verbessern (Deutsche Offenlegungsschrift 25 57 215, Deutsche Patentschrift DE 43 11 978). Dieser Prozeß des Beulstrukturierens unterscheidet sich von dem in der Anmeldung 0 441 618 A 1 prinzipiell dadurch, daß nicht zwei Prägewalzen erforderlich sind, die mechanisch wirken, sondern daß nur ein Stützkern benötigt wird, auf dem die Materialbahn aufliegt, und gegen den sie hydraulisch angepreßt wird. Die hydraulische Herstellung polyedrischer, beispielsweise hexagonaler Strukturen, ist in der unter Nr PCT/EP 94/01043 veröffentlichten internationalen Patentanmeldung beschrieben worden (siehe dort Abb. 5 b und 5 c). Anstelle der hydraulischen Druckaufprägung kann der Druck auch mittels eines nicht strukturierten, elastischen Kissens oder durch einen nicht strukturierten Elastomeren aufgebracht werden. Die Stützelemente, gegen die die Materialbahn gedrückt wird, können aus einem starren oder auf dem Kern verschiebbaren, flexiblen Werkstoff bestehen.

Bei dem in der Europäischen Patentschrift 0 441 618 A 1 beschriebenen, rein mechanischen Formgebungsverfahren wird die Oberflächengüte des Ausgangswerkstoffs infolge starker mechanischer Verformung erheblich beeinträchtigt. Die in DE 35 87 768 T 2 beschriebene Vorrichtung zur Herstellung von Längssicken verwendet linienförmige, axiale, starre Stützelemente und ein elastisches Druckelement. Die Formsteifigkeit des so strukturierten Materials mit den axialen Sicken ist jedoch unbefriedigend, da Sicken aus geometrischen Gründen keine mehrdimensionale Formsteifigkeit ergeben. Die in O.S. 25 57 215, DE 43 11 978 und PCT/EP 94/01043 beschriebenen Umformverfahren erzeugen im Gegensatz zur Sicke durch versetze Beulstrukturen eine mehrdimensionale Formsteifigkeit ohne Beeinträchtigung der Oberflächengüte.

Die Aufgabe der vorliegenden Erfindung besteht darin, ein Verfahren anzugeben, das die Vorteile der bekannten Verfahren nutzt, ohne ihre Nachteile in Kauf zu nehmen.

Zu den wesentlichen Nachteilen der bekannten Verfahren zum Beulstrukturieren gehört, daß im Bereich tiefer Beulfalten örtliche Dehnungen und Stauchungen des zu strukturierenden Werkstoffs auftreten, die so stark sind, daß erhebliche plastische Verformungen entstehen, die in diesen Bereichen zu einer Schwächung des Materials führen, so daß der Werkstoff reißen kann.

Ein weiterer, wesentlicher Nachteil der bekannten Verfahren zum Strukturieren von dünnen Materialbahnen oder Folien besteht darin, daß dabei die Selbstorganisation der Falten, die die Verbesserung der Formsteifigkeit bewirken, gar nicht oder nur unzulänglich ermöglicht wird. Unter Selbstorganisation der Beulfalten ist ein Vorgang zu verstehen, bei dem sich der Werkstoff mehrdimensional derart faltet, daß sich seine Formsteifigkeit verbessert. Dieser Umformprozeß des Beulstrukturierens erfolgt beispielsweise in der Weise, daß das gekrümmte, dünnwandige Material, das innen durch im Abstand zueinander angeordnete, starre Stützringe oder durch eine schraubenförmige, starre Stützspirale (O.S. 25 57 215) abgestützt wird, durch äußeren Druck instabil wird. Die Instabilität löst eine mehrdimensionale Faltung aus, und dadurch bilden sich versetzte, viereckige Beulstrukturen. So geht das dünnwandige Material in einen neuen Zustand über, dessen wichtigste Eigenschaft in einer verbesserten Formsteifigkeit besteht. Ein wesentlicher Nachteil dieser versetzten, viereckigen Beulstrukturen besteht darin, daß im Bereich der Beulfalten starke plastische Verformungen entstehen, die das Material schwächen. Werden anstatt der starren Stützelemente flexible Stützelemente, beispielsweise aus Gummi, die sich während des Beulstrukturierens in axialer Richtung auf einem Kern verschieben können, verwendet, entstehen sechseckige Beulstrukturen. Diese sechseckigen Beulstrukturen lassen sich auch durch sechseckige, starre Stützelemente herstellen (PCT/EP 94/01043). Untersuchungen haben gezeigt, daß im Bereich der sechseckigen Beulfalten starke plastische Verformungen entstehen, die das Material schwächen, ähnlich wie bei den versetzten, viereckigen Beulstrukturen. Diese viereckigen oder sechseckigen Beulstrukturen weisen ferner den wesentlichen Nachteil auf, daß sich die so strukturierte Materialbahn nicht von der zylindrischen Gestalt in die ebene Form richten läßt, ohne erheblich an isotroper Formsteifigkeit einzubüßen. Untersuchungen haben gezeigt, daß die lateralen Beulfalten, die in Transportrichtung der Materialbahn angeordnet sind, nur mit erheblicher Kraft in die ebene Form gebogen werden können. Da sich dabei gleichzeitig die Beulfalten, die quer zur Transportrichtung der Materialbahn angeordnet sind, abflachen und nach innen etwas einwölben, verlieren diese Beulfalten durch das Richten in die ebene Form einen Teil ihrer ursprünglichen Formsteifigkeit. Je größer die Wanddicke der Materialbahn ist, desto gravierender wirken sich diese Nachteile aus, und eine isotrope Formsteifigkeit der strukturierten Materialbahn ist so nicht zu erzielen. Der wesentliche Nachteil dieser bekannten Strukturierverfahren besteht darin, daß die Strukturen auf eckige Formen, wie vier- und sechseckige Beulstrukturen, beschränkt bleiben. Durch diese Beschränkung konnte eine optimale Struktur der Beulfalten bisher nicht gefunden werden. Dabei erstreckt sich die Optimierung auf die Geometrie der Struktur und die geometrische Form der Falte selbst. Die Struktur der Beulen, beispielsweise ihre Größe und Tiefe, bestimmen bei gegebener Materialdicke den Zuwachs an Formsteifigkeit. Die Konturen der Falten müssen eine solche Form annehmen, daß trotz ihrer Ausprägung nur ein Minimum an plastischer Verformung auftritt. Es wurde nun gefunden, daß diese Kriterien nur erreichbar sind, wenn sich das Material in freier Selbsteinstellung in dieser Weise verformt.

Die Lösung dieser Aufgabe besteht erfindungsgemäß darin, daß die optimale Form der Beulfalten dadurch gefunden wird, daß bei der Verformung der Materialbahn mittels einer hydraulischen oder elastischen Druckübertragung die makroskopische Beulstruktur mittels Stützelementen nur vorgegeben wird, daß diese Stützelemente im Laufe der Strukturierung nachgeben, daß die Strukturfalten die Funktion der Stützelemente selbst übernehmen, und daß die Beulfalten und die Beulmulden in freier Selbsteinstellung eine solche optimale Form annehmen, daß sie dem herrschenden Verformungsdruck bei minimaler Plastifizierung standhalten.

Eine Ausgestaltung des Verfahrens besteht darin, daß eine gekrümmte, dünnwandige Materialbahn oder Folie auf der Innenseite mittels einer schneckenförmigen, biegsamen Stützspirale abgestützt und von außen mit Druck beaufschlagt wird. Die biegsame Stützspirale gibt bei äußerem Druck nach innen etwas nach und verdrillt sich dabei etwas, so daß sich der Durchmesser der Stützspirale ein wenig verringert. Auf diese Weise bilden sich zunächst Beulfalten von etwa viereckiger Form, die dann durch freie Selbsteinstellung eine optimale Form annehmen. Dabei übernehmen die anfangs schwach ausgebildeten Beulfalten der etwa viereckigen Struktur schrittweise die abstützende Wirkung der Stützspirale, da sich die Beulfalten mit zunehmender Tiefe in immer stärkerem Maße von selbst gegenseitig abstützen. Dagegen nimmt die abstützende Wirkung der biegsamen, spiralförmigen Stützspirale schrittweise ab, da sie mit zunehmendem äußeren Druck nach innen nachgibt. Auf diese Weise können sich die Beulfalten quasi von selbst frei ausbilden, und sie nehmen dabei selbstorganisierend die optimale Gestalt an, die dem Verformungsdruck standhält. Dies gilt nicht nur für die optimierte geometrische Anordnung der Beulstruktur, sondern auch für die Ausformung der einzelnen Beulfalte, d.h. ihrer äußeren Kontur bzw. Rundung.

Die geometrischen Anordnungen der auf diese Weise optimierten Beulfalten sind beispielsweise wappenförmige Strukturen, die aus Parallelogrammen entstanden sind, deren Schmalseiten spitz auslaufen und deren Längsseiten abgerundet sind. Die spitz auslaufenden Beulfalten sind auf optimierte Weise dadurch entstanden, daß die Selbstorganisation der Beulverformung bei einer gekrümmten Materialbahn, die innen mittels einer spiralförmigen Stützspirale abgestützt wurde, verkürzte Beulfalten parallel zur Rotationsachse der Stützspirale, d.h. senkrecht zur Transportrichtung der Materialbahn, begünstigt. Die optimierte Ausformung der einzelnen Beulfalten in lateraler Richtung zeigt sich darin, daß in lateraler Richtung der Materialbahn nur gerundete, beispielsweise S-förmige Beulfalten entstanden sind, d.h. daß Beulknicke mit großen plastischen Verformungen nicht auftreten. In den Bereichen der Materialbahn, in denen die Beulfalten zusammenlaufen, bilden sich etwa abgeflachte Faltsättel mit sanften Biegeradien. So werden mehrachsige Biegefalten, die große Plastifizierungen des Werkstoffs verursachen, vermieden.

Da die Beulfalten in lateraler Richtung der Materialbahn gerundet sind und sich deshalb leicht verformen lassen, können sie mit geringem Kraftaufwand und mit minimierter Plastifizierung des Werkstoffs in die ebene Form gebogen werden. Ferner sind die Beulfalten parallel zur Rotationsachse der Stützspirale, d.h. senkrecht zur Transportrichtung der Materialbahn, verkürzt. Das Ergebnis ist ein einfaches Richten so strukturierter Materialbahnen in die ebene Form, wobei die isotrope Formsteifigkeit der strukturierten Materialbahn erhalten bleibt. Das Ergebnis ist eine hohe Formsteifigkeit der Materialbahn bei minimierter plastischer Verformung. Deshalb lassen sich auf diese Weise auch Materialbahnen mit größeren Wanddicken strukturieren und in die ebene Form richten.

Die so erzeugten, etwa wappenförmigen Beulstrukturen besitzen jedoch noch keine exakt einheitliche Form. Die Ursachen hierfür sind u.a. unvermeidbare Inhomogenitäten des Werkstoffs, die Toleranzen der Wanddicke des Ausgangswerkstoffs und eine nicht exakt gleichmäßige Druckbeaufschlagung der Materialbahn. Eine weitere Ausgestaltung des Verfahrens gemäß der Erfindung besteht deshalb darin, für die optimale Bildung der Beulstruktur möglichst günstige Voraussetzungen zu schaffen. Dies erreicht man dadurch, daß die optimale Faltung bei freier Einstellung zunächst ermittelt wird, und daß Stützelemente so gestaltet werden, daß die dann entstehenden Beulstrukturen, insbesondere die Konturen der Falten, den durch Selbstorganisation gebildeten Geometrien weitgehend entsprechen.

Das wesentliche Merkmal der so optimierten Stützelemente besteht darin, daß die lateralen Stützelemente einen gerundeten, beispielsweise S-förmigen Verlauf aufweisen und daß die Stützelemente in den Bereichen, in denen mehrere Stützelemente zusammenlaufen, eine abgeflachte oder nur schwach gewölbte Kontur ergeben. Dabei sind die Radien dieser gerundeten, beispielsweise S-förmigen, lateralen Stützelemente im einzelnen nicht festgelegt. Das Ergebnis ist eine große Variationsbreite etwa wappenförmiger Beulstrukturen, die eine hohe Formsteifigkeit bei geringer plastischer Verformung des Ausgangsmaterials aufweisen. Die verkürzten Beulfalten senkrecht zur Transportrichtung der Materialbahn sollen ebenfalls nur gering plastifiziert werden, und deshalb erhalten die Stützelemente gerundete Konturen.

Die geometrischen Abmessungen der so optimierten Stützelemente lassen sich mit Hilfe der Gleichung (1) näherungsweise berechnen. Diese Gleichung (1) wurde experimentell für die Selbstorganisation etwa viereckiger Beulstrukturen entwickelt (O.S. 25 57 215), und man kann sie auch für etwa wappenförmige Beulstrukturen näherungsweise anwenden.

$$n = \frac{2,45 \cdot D^{0,5}}{h^{0,333} \cdot d^{0,2}} \tag{1}$$

In Gleichung (1) bedeuten

n  Anzahl der Beulstrukturen in Transportrichtung der Materialbahn bezogen auf einen Abwicklungszyklus der Stützelemente,

D  Durchmesser der Stützelemente in mm,

h  mittlerer Abstand der lateralen Stützelemente zueinander in mm und

s  Dicke der Materialbahn in mm.

Mit der geometrischen Beziehung (2) für die Beulzahl n auf dem Umfang der Stützelemente

$$n = \frac{D \cdot pi}{b} \tag{2}$$

errechnet sich für die Größen etwa quadratischer Beulstrukturen (h = b) die Beziehung (3):

$$h = b = 1,45 \cdot D^{0,75} \cdot d^{0,3} \tag{3}$$

Diese für etwa quadratische Beulstrukturen gültige Gleichung (3) kann man näherungsweise auch für etwa wappenförmige Beulstrukturen anwenden, wobei für die Größe h der mittlere Abstand der lateralen Stützelemente in mm gewählt wird. Da diese Gleichung (3) für etwa wappenförmige Beulstrukturen nur eine Näherung darstellt, kann man von dieser Vorgabe durch Gleichung (3) etwas abweichen.

Aus den Gleichungen (1), (2) und (3) folgt beispielsweise: Je höher die Wanddicke s der zu strukturierenden Materialbahn ist, desto größer wird der Abstand h der Stützelemente zueinander, und desto größer ist der Durchmesser D der Stützelemente zu wählen. Deshalb erhalten Materialbahnen mit höherer Wanddicke s größere Beulstrukturen als dünnwandige Materialbahnen.

Das Verfahren gemäß der Erfindung gewährleistet eine hohe Formsteifigkeit strukturierter Materialbahnen bei geringer plastischer Verformung des Werkstoffs. Die Plastifizierungsreserven, die noch in der strukturierten Materialbahn stecken, können für sekundäre Umformprozesse genutzt werden. Eine weitere Ausgestaltung des Verfahrens gemäß der Erfindung besteht darin, die nicht ausgeschöpften Plastifizierungsreserven der strukturierten Materialbahn zu nutzen, um die Formsteifigkeit weiter zu verbessern. Dies erreicht man nach dem Verfahren gemäß der Erfindung dadurch, daß man zunächst beispielsweise durch ein elastisches oder hydraulisches Kissen, das gegen die Materialbahn und die Stützelemente gedrückt wird, den beschriebenen Beulprozeß einleitet, und daß man dann das Kissen mit einem größeren Druck gegen die Materialbahn drückt, damit im Bereich der Beulmulden eine Nachverstreckung des Werkstoffs erfolgt. Gleichzeitig wird durch Reibwirkung zwischen der Materialbahn und den Stützelementen der Werkstofffluß der Materialbahn in Richtung der Beulmulde unterbunden oder eingeschränkt, damit der Werkstoff der Materialbahn im Bereich der Stützelemente nicht reißt. Diese Reibwirkung erreicht man durch geometrische Anpassung einer Evolvente an die Stützelemente in Richtung der Beulmulde. Bei der geometrischen Ausgestaltung der Kontur der Stützelemente berücksichtigt man die Mindest-Biegeradien, die u.a. von der Wanddicke und vom Werkstoffverhalten der zu verformenden Materialbahn abhängen.

Der Erfindungsgedanke wird anschließend beispielhaft erläutert:

Fig. 1 zeigt den schematischen Aufbau einer Vorrichtung zur Herstellung beulstrukturierter Materialbahnen und/oder Folien mit einer Walze, auf der Stützelemente angeordnet sind, und einer flexiblen Druckwalze (radialer Querschnitt).

Fig. 2 zeigt die Aufsicht auf zwei Beulstrukturen, die mit Hilfe einer Vorrichtung hergestellt sind, die mit einer elastischen, eingängigen, schraubenförmigen Stützspirale ausgestattet wurde.

Fig. 3 zeigt die Aufsicht auf eine Beulstruktur, die mit Hilfe einer Vorrichtung hergestellt ist, die mit einer elastischen, mehrgängigen, schraubenförmigen Stützspirale ausgestattet wurde.

Fig. 4 zeigt die Aufsicht auf eine Beulstruktur, die mit Hilfe einer Vorrichtung hergestellt ist, die mit wappenförmig ausgestalteten, starren Stützelementen ausgestattet wurde.

Fig. 5 zeigt den schematischen Aufbau von Stützelementen zur Herstellung wappenförmig beulstrukturierter Materialbahnen in einer Aufsicht auf Stützelemente und in vier Querschnitten durch Stützelemente.

Fig. 6 zeigt den schematischen Aufbau von starren Stützelementen zur Herstellung wappenförmig beulstrukturierter Materialbahnen mit Nachverstreckung des Werkstoffs.

Fig. 7 zeigt beispielhaft den schematischen Aufbau einer Vorrichtung zur Anwendung des Verfahrens gemäß der Erfindung mit einer Walze mit Stützelementen und mit einer flexiblen Druckwalze zur Herstellung wappenförmig beulstrukturierter Dosen.

Fig. 8 zeigt beispielhaft den schematischen Aufbau einer Vorrichtung zur Anwendung des Verfahrens gemäß der Erfindung mit einer Walze mit Stützelementen und mit einem konkaven, flexiblen Druckkissen zur Herstellung beulstrukturierter Dosen.

Fig. 9 zeigt die Seitenansicht auf eine wappenförmig beulstrukturierte Dose.

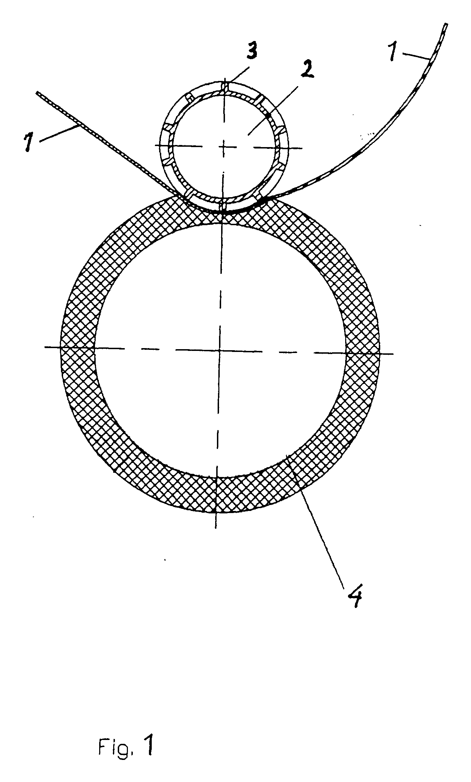

Die Fig. 1 zeigt den prinzipiellen Aufbau einer Vorrichtung zur Anwendung des Verfahrens gemäß der Erfindung zur Herstellung beulstrukturierter Materialbahnen oder Folien. Die Materialbahn 1 wird um die Walze 2, auf der die Stützelemente 3 angebracht sind, gebogen und durch Andrücken der elastischen Druckwalze 4 mit Druck beaufschlagt. Dadurch entstehen die Beulstrukturen in der Materialbahn.

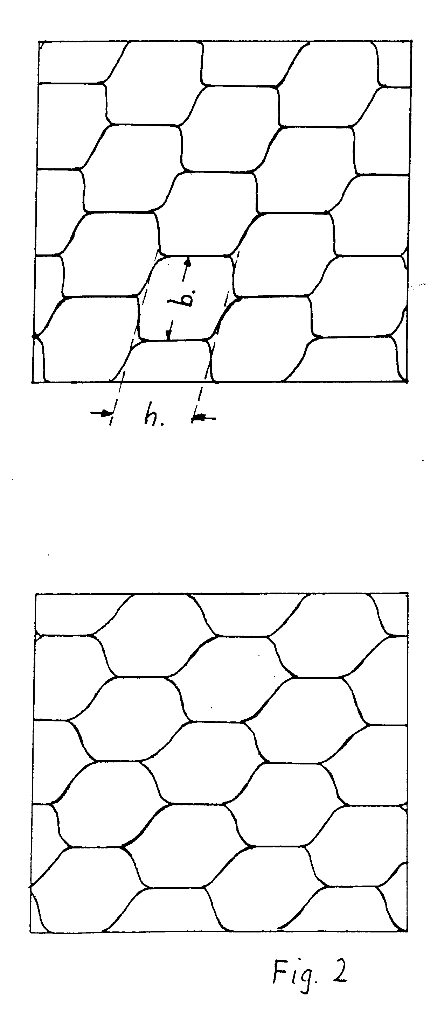

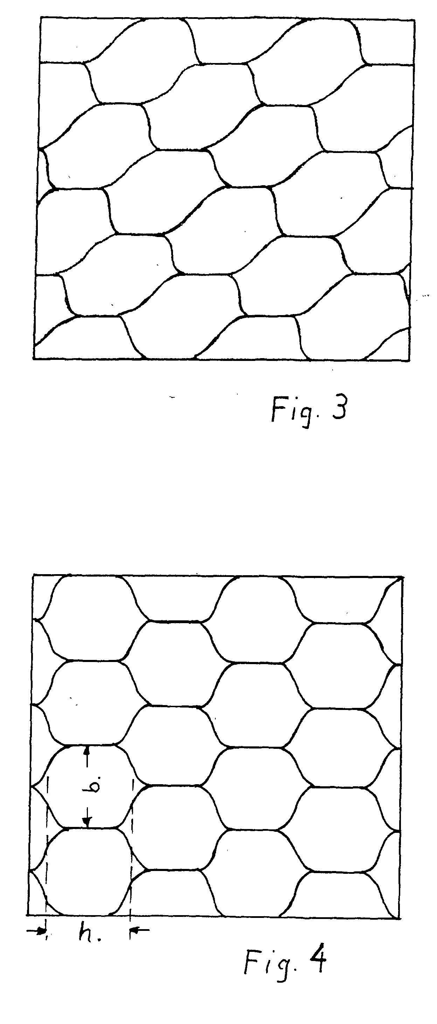

Die Figuren. 2 und 3 zeigen die Aufsicht von abgewickelten, beulstrukturierten Materialbahnen:

In Fig. 2 und Fig. 3 sind Strukturen dargestellt, die sich ergeben, wenn sich die Beulfalten durch Selbstorganisation frei einstellen. Das geschieht beispielsweise dadurch, daß statt der starren, schraubenförmigen Spirale eine biegsame, schraubenförmige Spirale als Stützelement verwendet wird, die in Druckrichtung nachgibt. Durch freie Einstellung ergeben sich dann wappenförmige Strukturen mit spitz auslaufenden Beulfalten senkrecht zur Transportrichtung der Materialbahn und laterale, etwa S-förmige Beulfalten in Transportrichtung der Materialbahn. In Fig. 2 wurde eine eingängige, schraubenförmige Stützspirale verwendet. In Fig. 2 sind beispielhaft zwei wappenförmige Strukturen schematisch dargestellt, die sich in der Gestalt der lateralen und der spitz auslaufenden Beulfalten unterscheiden. Die lateralen Beulfalten weisen den mittleren Abstand h zueinander auf, und die Beulfalten senkrecht zur Transportrichtung der Materialban weisen den mittleren Abstand b zueinander auf. In Fig. 3 wurde eine mehrgängige, schraubenförmige Stützspirale verwendet. In dieser Weise lassen sich unterschiedliche Winkel zwischen der Anordnung der Beulstrukturen und der Richtung der Materialbahn einstellen. Denn wegen der Richtungsabhängigkeit der Formsteifigkeit kann es sich als vorteilhaft erwiesen, die Beulstrukturierung nicht durch Stützelemente zu erzeugen, die in Richtung oder quer zur Transportbewegung der Materialbahn angeordnet sind, sondern die sich in einem einstellbaren Winkel dazu befinden.

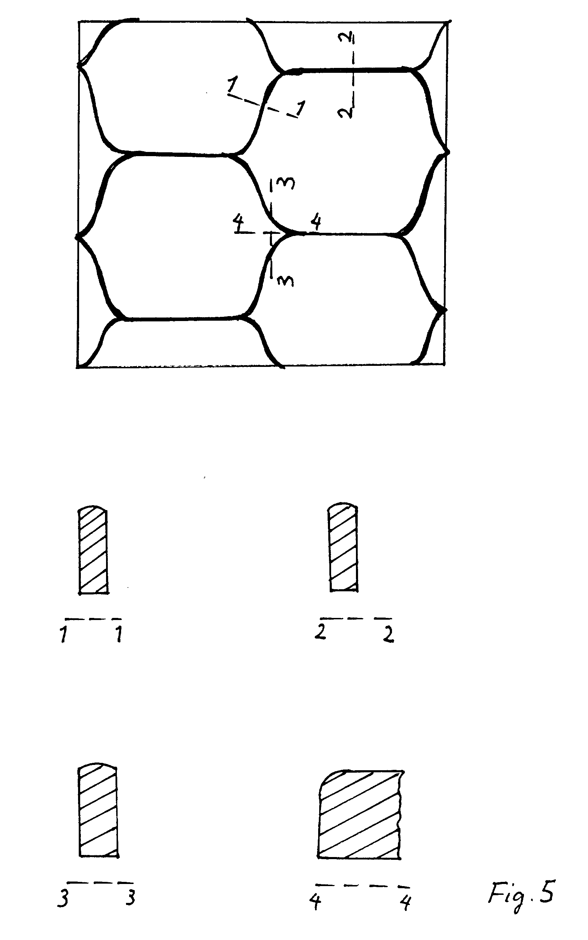

Fig. 4 zeigt die Aufsicht auf eine Beulstruktur, die mit Hilfe einer Vorrichtung hergestellt ist, die mit wappenförmigen, starren Stützelementen ausgestattet wurde. Die Gestalt und die Kontur dieser starren Stützelemente entsprechen weitgehend den sich durch Selbstorganisation einstellenden wappenförmigen Beulfalten. Da die Radien der gerundeten, beispielsweise S-förmigen Stützelemente im einzelnen nicht festgelegt sind, existiert eine große Variationsbreite etwa wappenförmiger Beulstrukturen.

Die Fig. 5 zeigt den schematischen Aufbau von starren Stützelementen zur Herstellung wappenförmig beulstrukturierter Materialbahnen in einer Aufsicht und in vier Querschnitten. In der Aufsicht sind die Bereiche der Stützelemente durch unterbrochene Linien markiert, für die die Konturen der Stützelemente im Querschnitt dargestellt sind. Die Markierung 1.....1 stellt den Querschnitt eines Stützelementes im Bereich der lateralen, etwa S-förmigen Beulfalte dar. Bei der Ausgestaltung der gerundeten Kontur des Stützelementes ist der Mindest-Biegeradius der zu verformenden Materialbahn zu berücksichtigen. Die Markierung 2.....2 stellt den Querschnitt eines Stützelementes im Bereich der Beulfalte senkrecht zur Transportrichtung der Materialbahn dar. Die Kontur dieses Stützelementes ist ebenfalls gerundet. Die Markierung 3....3 und die Markierung 4.....4 stellen beispielhaft zwei Querschnitte eines gerundeten Sattels mehrerer aufeinander zulaufenden Stützelementen dar. Dieser Sattel erhält auf diese Weise im Querschnitt sanft abgerundete Konturen, obwohl die Stützelemente in der Aufsicht eine spitz auslaufende Gestalt aufweisen.

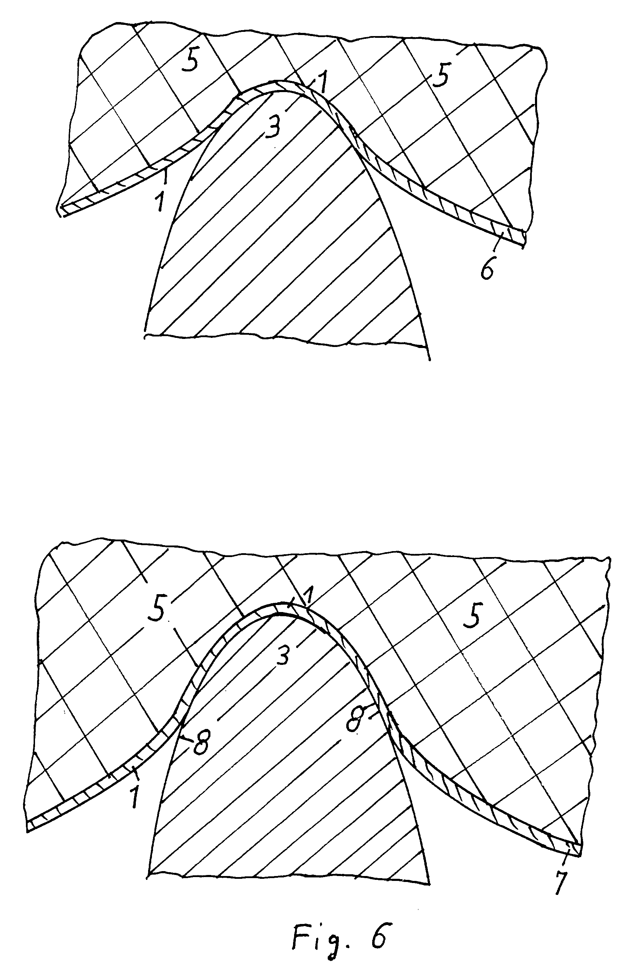

Die Fig. 6 zeigt in einem vergrößerten Querschnitt den schematischen Aufbau von starren Stützelementen zur Herstellung wappenförmig beulstrukturierter Materialbahnen mit Nachverstreckung des Werkstoffs, um die Formsteifigkeit weiter zu verbessern. Das elastische oder hydraulische Kissen 5 drückt gegen die Materialbahn 1 und das Stützelement 3 und löst so den Beulprozeß aus. Die Beulmulden der Materialbahn 6 bilden sich dabei zunächst frei aus, und sie besitzen noch große Plastifizierungsreserven. Wenn man dann das Kissen 5 mit einem größeren Druck gegen die Materialbahn drückt, ergibt sich eine Nachverstreckung des Werkstoffs im Bereich der Beulmulden 7. Durch Reibwirkung zwischen der Materialbahn 1 und dem Stützelement 3 wird der Werkstofffluß der Materialbahn 1 in Richtung der Beulmulde unterbunden oder eingeschränkt, damit der Werkstoff der Materialbahn 1 im Bereich der oberen, gerundeten Kontur des Stützelementes 3 nicht reißt. Diese Reibwirkung erreicht man durch geometrische Anpassung einer Evolvente 8 an die Stützelemente 3.

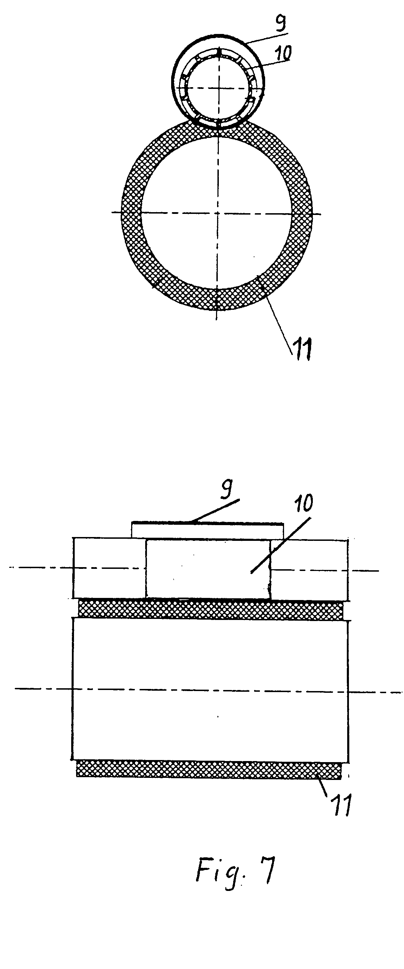

Die Fig. 7 zeigt den prinzipiellen Aufbau einer Vorrichtung zur Anwendung des erfindungsgemäßen Verfahrens zur Herstellung einer strukturierten Dose 9 mittels einer Stützelement-Walze 10 und einer flexiblen Druckwalze 11 ( im Querschnitt und im Längsschnitt).

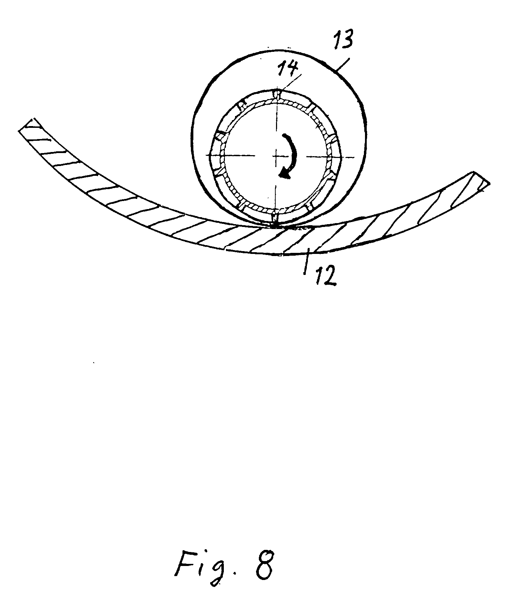

Die Fig. 8 zeigt den prinzipiellen Aufbau einer weiteren Vorrichtung zur Anwendung des erfindungsgemäßen Verfahrens zur Herstellung strukturierter Dosen. Statt der flexiblen Druckwalze drückt ein konkav geformtes, flexibles Kissen 12 gegen den Dosenrumpf 13, das sich eng an den Dosenrumpf anschmiegt und eine gleichmäßige Druckverteilung auf den Dosenrumpf und die Stützelement-Walze 14 gewährleistet.

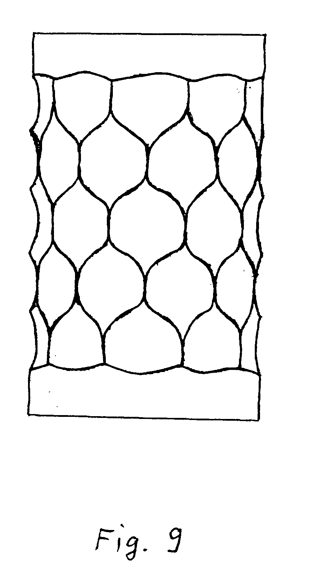

Die Fig. 9 zeigt die Seitenansicht einer wappenförmig strukturierten Dose mit spitz auslaufenden Beulfalten in axialer Richtung.

**Patentansprüche**

1. Verfahren zur Beulstrukturierung, bei dem gekrümmte Materialbahnen über im Abstand zueinander angeordnete Stützelmente abgestützt werden und bei dem an der gegenüberliegenden Seite insbesondere pneumatisch oder hydraulisch oder mittels eines Elastomers ein Verformungsdruck so aufgebracht wird, daß sich selbstorganisierend eine Wandstruktur aus Beulfalten einstellt, **dadurch gekennzeichnet, daß** die Stützelemente (3) nach innen nachgeben.

2. Verfahren nach Anspruch 1, **dadurch gekennzeichnet, daß** die Stützfalten sich gegenseitig abstützen.

3. Verfahren nach Anspruch 1 oder 2. **dadurch gekennzeichnet, daß** Beulstrukturen erzeugt werden, die in der Draufsicht wappenförmig oder tropfenförmig sind.

4. Verfahren nach einem der Ansprüche 1 bis 3, **dadurch gekennzeichnet, daß** Beulstrukturen erzeugt werden, die gerundete und spitz auslaufende Falten besitzen.

5. Verfahren nach einem der Ansprüche 1 bis 4, **dadurch gekennzeichnet, daß** Beulstrukturen erzeugt werden, die im Faltenquerschnitt überall Rundungen besitzen.

6. Verfahren nach einem der Ansprüche 1 bis 5, **gekennzeichnet durch** die Verwendung einer ein- oder mehrgängigen und/oder schraubenförmige, biegsamen Spirale.

7. Verfahren nach einem der Ansprüche 1 bis 6, **dadurch gekennzeichnet, daß** Beulstrukturen erzeugt werden, deren Beulfalten senkrecht zur Transportrichtung verkürzt sind.

8. Verfahren nach einem der Ansprüche 1 bis 7, **dadurch gekennzeichnet, daß** Beulstrukturen erzeugt werden, die in lateraler Richtung der Materialbahn (1) nur gerundete Beulfalten besitzen.

9. Verfahren nach Anspruch 8, **dadurch gekennzeichnet, daß** Beulstrukturen erzeugt werden, deren Beulfalten in lateraler Richtung eine S-Form besitzen.

10. Verfahren nach einem der Ansprüche 1 bis 9, **dadurch gekennzeichnet, daß** Beulstrukturen erzeugt werden, deren zusammenlaufende Beulfalten abgeflachte Materialsättel bilden.

11. Verfahren nach einem der Ansprüche 1 bis 10, **dadurch gekennzeichnet, daß** zunächst die Abmessungen der sich durch Selbstorganisation einstellenden Beulfalten einer Materialbahn ermittelt werden und dann die Stützelemente (3) auf das Maß der Beulfalten eingestellt werden, wobei die Stützelemente (3) starr sein können.

**12.** Verfahren nach einem der Ansprüche 1 bis 11, **gekennzeichnet durch** eine Nachverstreckung der Beulen.

**13.** Verfahren nach Anspruch 12, **gekennzeichnet durch** eine zweistufige Beulung mit einem beulinitiierenden Anfangsdruck und einer nachverstreckenden Druckerhöhung.

**14.** Verfahren nach Anspruch 12 oder 13, **gekennzeichnet durch** Reibschluß der Materialbahn (1) zwischen der Materialbahn und den Stützelementen bei der Nachverstreckung.

**15.** Verfahren nach einem der Ansprüche 12 bis 14, **gekennzeichnet durch** Verwendung von Stützelmenten (3) mit geometrischer Anpassung einer Evolvente an die Stützelemente (3) in Richtung der Beulmulde.

**16.** Verfahren nach einem der Ansprüche 1 bis 15, **gekennzeichnet durch** eine Einstellung Winkelstellung der Stützelemente (3) zur Transportrichtung der Materialbahn (1).

**17.** Verfahren nach Anspruch 16, **dadurch gekennzeichnet, daß** durch Veränderung der Winkelstellung die Formsteifigkeit der Materialbahn (1) optimiert wird.

**18.** Verfahren nach einem der Ansprüche 1 bis 16, **gekennzeichnet durch** eine Tiefeneinstellung der Beulfalten in Transportbewegungsrichtung und/oder senkrecht (quer) zur Transportbewegungsrichtung der Materialbahn (1).

**19.** Verfahren nach einem der Ansprüche 16 bis 18, **dadurch gekennzeichnet, daß** gewalzten, glatten, anisotropen Materialbahnen (1) durch Veränderung der Winkelstellung der Stützelemente und Beulstrukturen sowie der Strukturtiefe ein isotropes Verhalten gegeben wird.

**20.** Verfahren nach einem der Ansprüche 1 bis 19, **gekennzeichnet durch** die Verwendung einer flexiblen Druckwalze (4) oder eines konkav geformten Kissens (12) zur Aufbringung des Verformungsdruckes.

**21.** Verfahren nach einem der Ansprüche 1 bis 20, **dadurch gekennzeichnet, daß** die geometrischen Abmessungen der Stützelemente und der Beulen nach folgenden Beziehungen bestimmt werden

$$n = \frac{2,45\ D^{0,5}}{h^{0,333}\ s^{0,2}} \qquad n = \frac{D\ pi}{b} \qquad h = b = 1,45\ D^{0,75}\ s^{0,3}$$

worin

a) n die Anzahl der Beulstrukturen in Transportrichtung der Materialbahn bezogen auf einen Abwickelungszyklus der Stützelemente,
b) D der Durchmesser der Stützelemente in mm
c) h der mittlere Abstand der lateralen Sützelemente zueinander in mm
d) s die Dicke der Materialbahn in mm
e) b der Abstand der quer zur Transportrichtung der Materialbahn verlaufenden Beulfalten in mm ist
f) pi die Kreiszahl 3,14

ist.

**Claims**

**1.** Process for vault-structuring, in which curved material sheets are supported on supporting elements arranged at distances from each other and in which a forming pressure (in particular pneumatic, hydraulic, or by means of an elastomer) is applied on the oppositc side in such a way that the wall is profiled with vault folds in a self-organizing manner, **characterized by** the fact that supporting elements (3) subside towards the inside.

**2.** Process according to first claim, **characterized by** the fact that the supporting folds support each other.

**3.** Process according to claim I or 2, **characterized by** the fact that spade-shaped or drop-shaped vault structures form in horizontal projection.

4. Process according to one or several of claims 1 to 3, **characterized by** the fact that the vault structures have rounded or tapered folds.

5. Process according to one or several of claims 1 to 4, **characterized by** the fact that the vault folds are rounded everywhere in the cross section of the fold.

6. Process according to one or several of claims 1 to 5, **characterized by** the fact that a single-thread or multi-thread and/or helical, flexible spiral is used.

7. Process according to one or several of claims 1 to 6, **characterized by** the fact that shortened vault folds form perpendicular to the direction of feed of the material sheet (1).

8. Process according to one or several of claims 1 to 7, **characterized by** the fact that exclusively rounded vault folds are produced in lateral direction of the material sheet (1).

9. Process according to claim 8, **characterized by** the fact that the vault folds in lateral direction of the material sheet are S-shaped.

10. Process according to one or several of claims 1 to 9, **characterized by** the fact that the converging vault folds form flattened material saddles.

11. Process according to one or several of claims 1 to 10, **characterized by** the fact that first those dimensions of the vault folds of a material sheet are determined that adjust by self-organization, and then the supporting elements (3) arc adjusted to the dimensions of the vault folds; the supporting elements (3) may be rigid.

12. Process according to one or several of claims 1 to 11, **characterized by** re-elongation of the vaults.

13. Process according to claim 12, **characterized by** vault-structuring in two stages, with a pressure initiating the vaults and a re-elongating increase of pressure.

14. Process according to claim 12 or 13, **characterized by** frictional locking between the material sheet (1) and the supporting elements during re-elongation.

15. Process according to one or several of claims 12 to 14, charactcrized by the fact that supporting elements (3) with geometrical adjustment of an involute to the supporting elements (3) in the direction of the vault trough arc used.

16. Process according to one or several of claims I to 15, **characterized by** the fact that the angle between the supporting elements (3) and the direction of feed of the material sheet (1) is adjusted.

17. Process according to claim 16, **characterized by** the fact that modification of the angle optimizes the inherent stability of the material sheet (1).

18. Process according to one or several of claims 1 to 16, **characterized by** the fact that the depth of the vault folds is adjusted in the direction of and/or perpendicular to the direction of feed of the material sheet (1).

19. Process according to one or several of claims 16 to 18, **characterized by** the fact that rolled, smooth, anisotropic material sheets (1) are provided with isotropic properties by modification of the angle of the supporting elements and vault structures and of the depth of the structure.

20. Process according to one or several of claims 1 to 19, **characterized by** the fact that a flexible pressure roller (4) or a concave-shaped cushion (12) is used to apply pressure.

21. Process according to one or several of claims 1 to 20, **characterized by** the fact that the geometrical dimensions of the supporting elements and the vaults are determined by the following equations:

$$n = \frac{2{,}45 * D^{0.5}}{h^{0.333} * s^{0.2}} \qquad n = \frac{D * \pi}{b} \quad h = b = 1.45 * D^{0.75} * s^{0.3}$$

where

a) n is the number of vault structures in the direction of feed of the material sheet referred to one turning cycle of the supporting elements
b) D is the diameter in mm of the supporting elements
c) h is the mean distance in mm of the lateral supporting elements from each other
d) s is the thickness in mm of the material sheets
e) b is the distance in mm of the vault folds perpendicular to the direction of feed of the material sheet
f) $\pi$ is the number pi (3.14).

**Revendications**

1. Procédé destiné à former des creux. *Procédé* par lequel des feuilles continues et cintrées d'un matériau s'appuyant sur des éléments disposés à une certaine distance les uns des autres sont soumises à une pression de déformation apportée du côté opposé soit par voie pneumatique, soit par voie hydraulique soit encore au moyen d'un élastomère, de manière à former une structure de paroi à partir du repli du creux et **caractérisé par le fait que** les éléments d'appuis (3) se dilatent vers l'intérieur.

2. Procédé visé à la revendication 1, **caractérisé par le fait que** les replis de soutien s'appuient mutuellement .

3. Procédé visé à la revendication 1 ou 2, **caractérisé par le fait que** les structures produites en creux ont la forme d'écusson ou de goutte dans la vue en plan.

4. Procédé visé dans l'une des revendications 1 à 3, **caractérisé par le fait que** les structures produites en creux possèdent des replis arrondis ou saillant en pointe.

5. Procédé visé dans l'une des revendications 1 à 4, **caractérisé par le fait que** les structures produites en creux possèdent partout des courbures dans la section du repli.

6. Procédé visé dans l'une des revendications 1 à 5, **caractérisé par** l'utilisation d'une spirale flexible à une ou plusieurs voies et/ou en forme de vis.

7. Procédé visé dans l'une des revendications 1 à 6, **caractérisé par le fait que** les structures en creux présentent des replis raccourcis verticalement par rapport au sens de déplacement.

8. Procédé visé dans l'une des revendications 1 à 7, **caractérisé par le fait que** les structures en creux ne possèdent que des replis arrondis dans le sens latéral de la feuille continue du matériau (1).

9. Procédé visé à la revendication 8, **caractérisé par le fait que** les structures en creux ont des replis possédant une forme en S dans le sens latéral.

10. Procédé visé dans l'une des revendications 1 à 9, **caractérisé par le fait que** les structures en creux ont des replis convergents formant des sellettes aplaties dans le matériau .

11. Procédé visé dans l'une des revendications 1 à 10, **caractérisé par** le fait d'obtenir tout d'abord les dimensions des replis de creux dans une feuille continue d'un matériau donne et de régler ensuite les éléments d'appui (3) à la cote des replis des creux, les éléments d'appui (3) pouvant être rigides dans le cas d'espèce.

12. Procédé visé dans l'une des revendications 1 à 11, **caractérisé par** un allongement ultérieur des creux.

13. Procédé visé à la revendication 12, **caractérisé par** un creux réalisé en deux étapes avec tout d'abord une pression initiale pour former le creux et une augmentation de ladite pression pour provoquer un allongement ultérieur.

14. Procédé visé aux revendications 12 ou 13, **caractérisé par** le frottement de la feuille continue du matériau (1) sur les éléments d'appui lors de l'allongement ultérieur.

15. Procédé visé aux revendications 12 ou 14, **caractérisé par** l'utilisation d'éléments d'appui (3) avec adaptation géométrique d'une développante sur lesdits éléments d'appui (3) en direction du creux.

16. Procédé visé dans l'une des revendications 1 à 15, **caractérisé par** un réglage de la position angulaire des éléments d'appui (3) par rapport à la direction de déplacement de la feuille continue du matériau (1)

17. Procédé visé à la revéndication 16, **caractérisé par** une meilleure rigidité de forme de la feuille continue du matériau (1) par suite de la modification de la position angulaire.

18. Procédé visé dans l'une des revendications 1 à 16, **caractérisé par** un réglage de la profondeur des replis du creux dans le sens du déplacement et/ou verticalement (transversalement) par rapport au sens de déplacement de la feuille continue du matériau (1)

19. Procédé visé dans l'une des revendications 16 à 18, **caractérisé par le fait que** les feuilles continues anisotropes, lisses et laminées (1) sont dotées d'un comportement isotrope par modification de la position angulaire des éléments d'appui et des structures de creux ainsi qu'à la profondeur de la structure.

20. Procédé visé dans l'une des revendications 1 à 19, **caractérisé par** l'utilisation d'un cylindre de pression flexible (4) ou d'un coussin de forme concave (12) pour apporter la pression de déformation.

21. Procédé visé dans l'une des revendications 1 à 20, **caractérisé par le fait que** les dimensions géométriques des éléments d'appui et des creux sont déterminées d'après les rapports suivants :

$$n = \frac{2{,}45 \, D^{0{,}5}}{h^{0{,}333} \, s^{0{,}2}} \qquad n = \frac{D \, pi}{b} \qquad h = b = 1{,}45 \, D^{0{,}75} \, s^{0{,}3}$$

où

a) $n$ signifie le nombre des structures de creux dans le sens du déplacement de la feuille continue du matériau rapporté à un cycle de développement des éléments d'appui.

b) $D$ est le diamètre des éléments d'appui en mm.

c) $h$ est l'écart moyen des éléments d'appui latéraux entre eux en mm.

d) $s$ est l'épaisseur de la feuille continue du matériau en mm.

e) $b$ la distance en mm des replis de creux qui se déroulent transversalement par rapport à la direction de déplacement de la feuille continue.

f) $pi$ le nombre 3,14 (circonférence du cercle).

Fig. 1

Fig. 2

EP 0 888 208 B1

Fig. 3

Fig. 4

13

Fig. 5

14

Fig. 6

Fig. 7

Fig. 8

Fig. 9